# EUROPÄISCHE PATENTANMELDUNG

(11) **EP 2 952 531 A1**
(43) Veröffentlichungstag der Anmeldung: **09.12.2015**
(21) Anmeldenummer: 14170798.4
(22) Anmeldetag: 02.06.2014
(51) Int. Cl.: C08G 18/66, C08G 18/76, C08G 18/79, C08K 3/00, C08K 3/36, C08K 3/40, C08G 18/10, C08G 18/24, C08G 18/32, C08G 18/42

(54) **Kompakte Elastomerformteile auf Basis von Polyurethan**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von porenfreien Polyurethanelastomerformteilen mit einer Shore D Härte nach DIN 53505 von 60 oder mehr, bei dem man (a) Polyesterdiol mit einer OH-Zahl von 20 bis 100 mg KOH/g und (b) Kettenverlängerer bestehend aus Diol mit einem Molekulargewicht von kleiner 300 g/mol mit (c) Isocyanatprepolyme-ren, erhältlich durch Umsetzung von Diisocyanat mit Polyesterolen mit einer Funktionalität von 1,95 bis 2,2 und einer OH-Zahl von 20 bis 200 mg KOH/g, und gegebenenfalls (d) Katalysatoren, (e) Emulgator und (f) sonstigen Zusatzstoffen zu einer Reaktionsmischung vermischt, in eine Form gibt und zum Polyurethanelastomer aushärtet. Weiter betrifft die vorliegende Erfindung Polyurethanelastomerformteile erhältlich nach einem solchen Verfahren sowie die Verwendung dieser Polyurethanformteile als Verkleidungsteil für Nutzfahrzeuge, Karosseriebauteil im Fahrzeugbau oder ein Verkleidungsteil von einer Maschinenanlage.

## Beschreibung

Die vorliegende Erfindung betrifft ein Verfahren zur Herstellung von porenfreien Polyurethanelastomerformteilen mit einer Shore D Härte nach DIN 53505 von 60 oder mehr, bei dem man (a) Polyesterdiol mit einer OH-Zahl von 20 bis 100 mg KOH/g und (b) Kettenverlängerer bestehend aus Diol mit einem Molekulargewicht von kleiner 300 g/mol mit (c) Isocyanatprepolymeren, erhältlich durch Umsetzung von Diisocyanat mit Polyesterolen mit einer Funktionalität von 1,95 bis 2,2 und einer OH-Zahl von 20 bis 200 mg KOH/g, und gegebenenfalls (d) Katalysatoren, (e) Emulgator und (f) sonstigen Zusatzstoffen zu einer Reaktionsmischung vermischt, in eine Form gibt und zum Polyurethanesterlastomer aushärtet. Weiter betrifft die vorliegende Erfindung Polyurethanelastomerformteile erhältlich nach einem solchen Verfahren sowie die Verwendung dieser Polyurethanformteile als Verkleidungsteil für Nutzfahrzeuge, Karosseriebauteil im Fahrzeugbau oder ein Verkleidungsteil von einer Maschinenanlage.

Formteile zur Herstellung von elastomeren Polyurethan (Gießelastomere auf Basis von Diolen) werden üblicherweise im Niederdruckverfahren gegossen. (Problem: typische RIM Systeme werden auch häufig als Elastomere bezeichnet) Dazu werden Isocyanat, Isocyanatreaktive Komponente und gegebenenfalls Kettenverlängerer sowie Katalysatoren und weitere Zusatzstoffe mit einer exakt dosierenden Zahnradpumpe in einen Mischkopf dosiert, dort mit Hilfe eines mechanischen Rührwerks vermischt und in eine offene Form gegeben. Ein solches, sogenanntes Niederdruckverfahren ist beispielsweise in "Kunststoffhandbuch, Band 7, Polyurethane", Carl Hanser Verlag, 3. Auflage 1993, Kapitel 4. beschrieben. Nachteilig am Niederdruckverfahren ist, dass eine wirtschaftliche Herstellung der Formteile nur in offenen Formen bzw. in geschlossenen Formen mit einfacher Geometrie und geringem Füllvolumen erfolgen kann, da der Förderdruck und die Förderleistung der Niederdrucksysteme nicht ausreicht, um komplexe, großvolumige geschlossen Formen zu füllen. Sollen größere Formteile hergestellt werden, müssen die Katalysatoren so gewählt werden, dass die Reaktionsmischung noch lange eine geringe Viskosität aufweist, was eine lange Aushärtezeit zur Folge hat und damit unwirtschaftlich ist.

DE 4232941 offenbart die Herstellung von elastomeren Polyurethanformteilen im Gegenstromverfahren, dem sogenannten Hochdruckverfahren. Dieses Verfahren ermöglicht eine schnelle und vollständige Füllung auch komplexer, großvolumiger Formen, da die Füllung der Form mit hohem Druck erfolgen kann und das Hochdruckverfahren eine große Förderleistung ermöglicht. Ein Nachteil des Verfahrens nach DE 4232941 ist, dass Formteile mit einer Härte von 60 Shore D nach DIN 53505 und darüber schlechte mechanische Eigenschaften, wie Steifigkeit, Zugfestigkeit und Bruchdehnung, sowie Oberflächendefekte aufweisen

EP 1964866 beschreibt die Herstellung von harten, porenfreien Polyurethanelastomerformteilen mit einer Shore D-Härte von 60 oder mehr, bei dem man Polytetrahydrofuran und Butandiol mit Isocyanat und Emulgator und Trennmittel sowie gegebenenfalls Katalysatoren, Reaktivkettenverlängerern und sonstigen Zusatzstoffen zum Polyurethanelastomer umsetzt. Nachteilig ist hier, dass die Polyolkomponente bei Raumtemperatur entmischt und daher Emulgator benötigt wird, und dass die Isocyanatkomponente bei Raumtemperatur instabil ist und teilweise phasensepariert. Auch sind die eingesetzten Polytetrahydrofurane teuer. Weiter ist die Oberflächengüte der Polyurethanformteile nach EP 1964866 verbesserungswürdig.

Aufgabe der vorliegenden Erfindung war es daher, kompakte Elastomerformteile auf Polyurethanbasis zu liefern, die hervorragende Oberflächeneigenschaften aufweisen, und die ohne Einsatz von und Trennmitteln verarbeitbar sind.

Die erfindungsgemäße Aufgabe wird gelöst durch Polyurethanelastomerformteile mit einer Shore D Härte nach DIN 53505 von 60 oder mehr, herstellbar durch ein Verfahren bei dem man (a) Polyesterdiol mit einer OH-Zahl von 20 bis 100 mg KOH/g und (b) Kettenverlängerer bestehend aus Diol mit einem Molekulargewicht von kleiner 300 g/mol mit (c) Isocyanatprepolymeren, erhältlich durch Umsetzung von Diisocyanat mit Polyesterolen mit einer Funktionalität von 1,95 bis 2,2 und einer OH-Zahl von 20 bis 200 mg KOH/g, und gegebenenfalls (d) Katalysatoren, (e) Emulgator und (f) sonstigen Zusatzstoffen zu einer Reaktionsmischung vermischt, in eine Form gibt und zum Polyurethanelastomer aushärtet.

Als Polyesterdiole (a) werden Polyester mit zwei gegenüber Isocyanaten reaktiven OH-Gruppen und einer OH-Zahl von 20 bis 100 mg KOH/g, vorzugsweise 35 bis 80 mg KOH/g und besonders bevorzugt 45 bis 60 mg KOH/g eingesetzt. Polyesterdiole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und zweiwertigen Alkoholen mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden als Dicarbonsäurekomponente Dicarbonsäuregemische, die Adipinsäure enthalten, wie Gemische aus Bernstein-, Glutar- und Adipinsäure in Mengenverhältnissen von beispielsweise 20 bis 35 : 35 bis 50 : 20 bis 32 Gew.-Teilen, und insbesondere ausschließlich Adipinsäure als Dicarbonsäurekomponente.

Beispiele für Diole sind: Ethandiol, Diethylenglykol, 1,2- bzw. 1,3-Propandiol, Dipropylenglykol, 1,4-Butandiol, 1,5-Pentandiol, 1,6-Hexandiol und 1,10-Decandiol. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Vorzugsweise enthält die Diolkomponente zur Herstellung des Polyesterdiols (a) Diole mit 4 bis 8 Kohlenstoffatomen, besonders bevorzugt 1,4-Butandiol in Mischung oder als alleinige Diolkomponente. In einer bevorzugten Ausführungsform besteht die Diolkomponente aus Diolen mit im Mittel 4 bis 8 Kohlenstoffatomen, bezogen auf die molekulare Anzahl der in der Diolkomponente enthaltenen Diole. Diese wird ermittelt indem die Anzahl der Moleküle mit jeweils gleichen Gehalt an Kohlenstoffatomen aufsummiert und mit der jeweiligen Anzahl an enthaltenen Kohlenstoffatomen multipliziert wird und anschließend diese Summe durch die Gesamtanzahl an Diolmolekülen zur Herstellung des Polyesterdiols (a) geteilt wird.

Zur Herstellung der Polyesterpolyole (a) können die Dicarbonsäuren und/oder -derivate und zweiwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Vorzugsweise werden als Polyesterdiole (a) Polyester aus Adipinsäure, Butandiol und Neopentylglykol, aus Adipinsäure und einer Mischung aus Butandiol, Pentandiol und Hexandiol, aus Adipinsaeure und Butandiol, aus Adipinsaeure und Hexandiol, aus Adipinsaeure und einer Mischung aus Butandiol und Ethylenglycol, aus Adipinsaeure und einer Mischung aus Hexandiol und Ethylenglycol, aus Dodekandisaeure und Neopentylglykol oder aus Sebacinsäure und Neopentylglykol eingesetzt.

In einer bevorzugten Ausführungsform werden neben den gegebenenfalls in den Komponenten (a) bis (f) beschriebenen Ethern keine weiteren in der Polyurethanchemie bekannten Polyetherole eingesetzt. Insbesondere werden keine Polyetherole mit einer Funktionalität von größer 2, vorzugsweise 2 bis 8, und einem zahlenmittleren Molekulargewicht von größer 450 g/mol, bevorzugt 500 bis 6000 g/mol, eingesetzt.

Weiter wird ein Kettenverlängerer (b) zu der Reaktionsmischung zugegeben. Dabei handelt es sich um ein Diol mit einem Molekulargewicht kleiner 400, bevorzugt kleiner 300 und insbesondere kleiner 200 g/mol. Beispielsweise können als Kettenverlängerer Hydrochinon-bis-(2-hydroxyethyl)eter, Resorcin, 1,6 Hexandiol, Monoethylenglycol, Diethylenglycol oder Butandiol, wie1,4-Butandiol, 2,3 Butandiol oder Mischungen beider eingesetzt werden. Vorzugsweise wird Butandiol, besonders bevorzugt 1,4 Butandiol als Kettenverlängerer eingesetzt.

Das Gewichtsverhältnis von Kettenverlängerer zu Polyesterdiol beträgt vorzugsweise 30 : 70 bis 60 : 40, bevorzugt 40 : 60 bis 50 : 50.

Als Isocyanatprepolymer wird das Reaktionsprodukt von Diisocyanat mit Polyesterolen mit einer Funktionalität von 1,95 bis 2,2 und einer OH-Zahl von 20 bis 200 mg KOH/g eingesetzt. Vorzugsweise weist das Prepolymer einen Isocyanatgehalt von 15 bis 32 Gew.-% NCO, vorzugsweise 20 bis 30 Gew.-% NCO und insbesondere 24 bis 29 Gew.-% NCO auf.

Als Isocyanat werden vorzugsweise Diisocyanate, besonders bevorzugt aromatische Diisocyanate, aber auch aliphatische Diisocyanate, wie Hexamethylendiisocyanat (HDI), 4,4'-Diisocyanato-dicyclohexylmethan (HMDI) oder Isophorondiisocyanat (IPDI), eingesetzt. Die aromatischen Isocyanate umfassen beispielsweise aromatische Diisocyanate, wie 2,2'-, 2,4'- und 4,4'-Diphenylmethandiisocyanat oder deren Derivate, die Mischungen aus verschiedenen monomeren Diphenylmethandiisocyanaten, 2,4- oder 2,6-Toluylendiisocyanat (TDI) oder deren Mischungen oder Naphtylendiisocyanat (NDI) oder Mischungen daraus. Vorzugsweise wird monomeres 4,4'-Diphenylmethandiisocyanat oder Mischungen von 4,4'-Diphenylmethandiisocyanat mit dessen Derivaten als Isocyanat eingesetzt. Dabei kann 4,4'-Diphenylmethandiisocyanat besonders bevorzugt geringe Mengen, bis etwa 10 Gew.-%, carbodiimid, uretdion-, allophanat- oder uretoniminmodifiziertes 4,4'-Diphenylmethandiisocyanat, insbesondere carbodiimid modifiziertes 4,4'-Diphenylmethandiisocyanat enthalten. Die Funktionalität des eingesetzten Isocyanats kann durch Zugabe höherfunktionaler Isocyanate erhöht werden. Vorzugsweise beträgt die Funktionalität des Isocyanats 2,0 bis 2,2, insbesondere 2,0. Zur Erhöhung der Funktionalität kann beispielsweise Carbodiimidmodifiziertes 4,4'-Diphenylmethandiisocyanat eingesetzt werden. In einer besonders bevorzugten Ausführungsform wird als Diisocyanat 4,4' Diphenylmethandiisocyanat eingesetzt, das vorzugsweise 0-10 Gew.-%, bezogen auf das Gesamtgewicht des eingesetzten Isocyanats carbodiimidmodifiziertes 4,4' Diphenylmethandiisocyanat enthält.

Die Isocyanatprepolymere sind erhältlich, indem vorstehend beschriebene Polyisocyanate im Überschuss, beispielsweise bei Temperaturen von 30 bis 100 °C, bevorzugt bei etwa 80 °C, mit oben beschrieben Polyesterpolyolen und gegebenenfalls den oben beschriebenen Kettenverlängerern zum Prepolymer umgesetzt werden.

Als Polyesterpolyol zur Herstellung der Polyisocyanatprepolymere (c) wird Polyesterol mit einer Funktionalität von 1,95 bis 2,2 und einer OH-Zahl von 20 bis 200 mg KOH/g eingesetzt. Diese Polyesterpolyole werden wie unter (a) beschrieben erhalten. Zur Erhöhung der Funktionalität auf größer zwei kann ein Teil der in der Diolkomponente eingesetzten Diole durch höherfunktionelle Polyole, wie Glycerin und Trimethylolpropan, ersetzt werden. Vorzugsweise werden zur Herstellung der Isocyanatprepolymere (c) keine Polyetherole eingesetzt.

Vorzugsweise wird die Funktionalität der zur Herstellung des Isocyanatprepolymeren (c) eingesetzten Komponenten so gewählt, dass das Isocyanatprepolymer (c) eine mittlere Funktionalität von 1,95 bis 2,2, besonders bevorzugt 2,0 bis 2,1 und insbesondere von 2,00 bis 2,05 aufweist.

Als Katalysatoren (d) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, oder Dialkylzinn-(IV)-mercaptide, sowie Bismutcarboxylate, wie Bismut(III)-neodecanoat, Bismut-2-etyhlhexanoat und Bismut-octanoat, sowie Phenylquecksilber-(II)-salze von organischen Carbonsäuren, z.B. Phenylquecksilberlaurat oder Phenylquecksilberpropionat, oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und 1,4-Diaza-bicyclo-(2,2,2)-octan sowie Alkanolaminverbindungen, wie Triethanolamin, Triisopropanolamin, N-Methyl- und N-Ethyl-diethanolamin und Dimethylethanolamin. Dabei können die stark basischen Aminkatalysatoren auch ganz oder teilweise durch Zugabe von Säuren blockiert sein. Die Katalysatoren können einzeln oder als Mischungen verwendet werden. Gegebenenfalls werden als Katalysatoren (e) Mischungen aus Metallkatalysatoren und basischen Aminkatalysatoren, die gegebenenfalls ganz oder teilweise blockiert sind, verwendet.

Die Katalysatoren können beispielsweise in einer Konzentration von 0,001 bis 5 Gew.-%, insbesondere 0,002 bis 1 Gew.-% als Katalysator bzw. Katalysatorkombination, bezogen auf das Gewicht von polymerem Diol, Kettenverlängerer, Reaktivkettenverlängerer und Katalysator eingesetzt werden.

Als Emulgatoren (e) kann jedes bekannte Tensid, wie anionische Tenside, kationische Tenside oder nichtionische Tenside eingesetzt werden. Vorzugsweise werden nichtionische Tenside, wie Fettalkoholethoxylate, Oxoalkoholethoxylate, Guerbetalkoholethoxylate, Alkylphenolethoxylate, ethoxyliertes Oleylamin, ethoxyliertes Kokosfettamin, ethoxyliertes Talgfettamin, ethoxyliertes Ölsäureamid, EO/PO-Blockpolymerisate, PIB-Derivate und Amide der Ölsäure, eingesetzt. Insbesondere wird als Emulgator ein Alkoxyethylenglycolether der allgemeinen Formel

RO(CH₂-CH₂-O)ₓH

eingesetzt, wobei R ein linearer oder verzweigtkettiger oder cyclischer Alkylrest mit 5 bis 20 Kohlenstoffatomen ist und x für eine ganze Zahl von 3 bis 15 steht. Besonders bevorzugt handelt es sich bei R um einen Decylrest und x steht für 7.

In einer bevorzugten Ausführungsform der vorliegenden Erfindung wird kein Emulgator (e) eingesetzt.

Als Zusatzstoffe (f) können alle zur Herstellung von Polyurethanen bekannten Hilfs- und Zusatzstoffe verwendet werden. Genannt seien beispielsweise Trennmittel, Füllstoffe, Farbstoffe, Pigmente, Flammschutzmittel, oberflächenaktive Substanzen und Hydrolyseschutzmittel. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Als geeignete Trennmittel seien beispielhaft genannt: Polysilikone, Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise wird als Trennmittel ein Metallsalz von Stearinsäure, besonders bevorzugt Zinkstearat eingesetzt, insbesondere zusammen mit dem Reaktivkettenverlängerer. Dabei wird das Zinkstearat im flüssigen Reaktivkettenverlängerer, vorzugsweise dem Polypropylenoxid mit zwei endständigen Aminogruppen, gelöst. Vorzugsweise werden im Rahmen der vorliegenden Erfindung keine Trennmittel eingesetzt.

Als Füllstoffe, insbesondere verstärkend wirkende Füllstoffe, sind die an sich bekannten, üblichen organischen und anorganischen Füllstoffe, Verstärkungsmittel usw. zu verstehen. Im Einzelnen seien beispielhaft genannt: anorganische Füllstoffe wie silikatische Mineralien, beispielsweise Quarzmehle, Schichtsilikate, wie Antigorit, Serpentin, Hornblenden, Amphibole, Chrisotil, und Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Quarzmehle, Aluminiumsilikat und Copräzipitate aus Bariumsulfat und Aluminiumsilikat sowie natürliche und synthetische faserförmige Mineralien wie Wollastonit, Metall- und Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Vorzugsweise werden als Füllstoffe solche mit einem mittleren Teilchendurchmesser von 0,1 bis 500, besonders bevorzugt von 1 bis 100 und insbesondere von 1 bis 10 µm eingesetzt. Dabei wird unter Durchmesser bei nicht kugelförmigen Teilchen deren Ausdehnung entlang der kürzesten Raumachse verstanden. Bevorzugt werden als Füllstoffe Glasfasern und Quarzmehle eingesetzt. Weiter können auch Gewebematten, wie Glasfasermatten oder Naturfasermatten als Füllstoffe eingesetzt werden.

Die anorganischen und organischen Füllstoffe können einzeln oder als Gemische verwendet werden und werden der Reaktionsmischung vorteilhafterweise in Mengen von 0,5 bis 30 Gew.-%, besonders bevorzugt 10 bis 20 Gew.-%, bezogen auf das Gewicht der gesamten Reaktionsmischung eingesetzt.

Als Additive zur Wasseradsorption werden vorzugsweise Aluminosilikate, ausgewählt aus der Gruppe der Natriumaluminasilikate, Kaliumaluminasilikate Calciumaluminasilikate Cäsiumaluminasilikate, Bariumaluminasilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem.

Wenn ein Additiv zur Wasserabsorption zugegeben wird, geschieht dies vorzugsweise in Mengen größer einem Gewichtsteil, besonders bevorzugt im Bereich von 1,2 bis 4 Gewichtsteilen, bezogen auf das Gesamtgewicht der Komponenten (a) bis (f).

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. , Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus. Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (a) bis (f) verwendet.

Zur Herstellung der erfindungsgemäßen Polyurethanformteile werden (a) Polyesterdiol und (b) Kettenverlängerer mit (c) Isocyanatprepolymer und gegebenenfalls (d) Katalysatoren, (e) Emulgator und (f) sonstigen Zusatzstoffen zu einer Reaktionsmischung vermischt, in eine Form gegeben und zum Polyurethanelastomer ausgehärtet. Dazu werden vorzugsweise (a) Polyesterdiol und (b) Kettenverlängerer und gegebenenfalls vorhandene (d) Katalysatoren, (e) Emulgatoren und (f) Zusatzstoffe mit dem Isocyanatprepolymer (c) vorzugsweise in solchen Mengen zur Umsetzung gebracht, dass der Isocyanatindex 95 bis 110, besonders bevorzugt 100 bis 106 und insbesondere 101 bis 105 beträgt. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Dabei wird vorzugsweise nach dem zweikomponentenverfahren gearbeitet, bei dem eine Polyolkomponente mit einer Isocyanatkomponente vermischt wird. Die Polyolkomponente enthält beim Zweikomponentenverfahren neben (a) Polyesterdiol und (b) Kettenverlängerer vorzugsweise (d) Katalysatoren, (e) Emulgatoren und (f) Zusatzstoffe. Die Isocyanatkomponente enthält das Isocyanatprepolymer (c).

Die Vermischung der Einsatzstoffe, vorzugsweise der Polyol- und der Isocyanatkomponente, erfolgt dabei vorzugsweise im Hochdruckverfahren. Die Polyolkomponente und Isocyanat werden dann mit hohem Druck von jeweils mindestens 100, vorzugsweise 100 bis 300 bar in eine Mischkammer eingespritzt und dort vereinigt. Der Druckabfall zum Ausgang der Mischkammer beträgt mindestens 50 bar, bevorzugt 50 bis 250 bar. Mit diesem Verfahren ist es möglich, große komplexe Formen mit Fließwegen von bis zu 3 Metern innerhalb von wenigen Sekunden zu füllen. Vorzugsweise werden die Polyolkomponente und Isocyanat auf eine Temperatur zwischen 30 und 120 °C, bevorzugt auf 50 bis 100 °C temperiert. Die Formtemperatur beträgt vorzugsweise zwischen 70 - 130 °C, besonders bevorzugt zwischen 100 und 120 °C.

Ein weiterer Vorteil des erfindungsgemäßen Verfahrens ist, dass große, komplexe Formteile aus thermoplastischem Polyurethan hergestellt werden können. Unter thermoplastischem Polyurethan wird ein Polyurethan verstanden, das thermoplastische Eigenschaften zeigt. Dabei versteht man unter thermoplastischen Eigenschaften, dass das thermoplastische Polyurethan bei Erwärmen wiederholt aufschmelzbar ist und dabei plastisches Fließen zeigt. Weitere Details zu erfindungsgemäßen thermoplastischen Polyurethanen finden sich im "Kunststoffhandbuch, Band 7, Polyurethane", Carl Hanser Verlag, 3. Auflage 1993, Kapitel 8.2. Thermoplastisches Polyurethan im rahmen der Erfindung wird erhalten, wenn als Isocyanat ausschließlich Diisocyanat eingesetzt wird. Die erfindungsgemäßen Formteile aus thermoplastischen Polyurethan haben den Vorteil, dass diese recycelt werden können, und dass thermisches Schweißen dieser Formteile, beispielsweise zu Reparaturzwecken, möglich ist. Dagegen können Formteile aus thermoplastischem Polyurethan zwar prinzipiell auch im konventionellen Spritzgussverfahren hergestellt werden, aufgrund der gegenüber der Reaktionsmischung im erfindungsgemäßen Verfahren höheren Viskosität der geschmolzenen Polymere ist im Spritzgussverfahren die Größe und Komplexität der Formen aber begrenzt.

Die nach dem erfindungsgemäßen Verfahren erhaltenen Polyurethanformteile weisen eine Härte von 60 Shore D und mehr, vorzugsweise 65 bis 80 Shore D und besonders bevorzugt 70 bis 80 Shore D nach DIN 53505 auf. Diese Formteile können beispielsweise als Verkleidungsteile für Nutzfahrzeuge, Interieur und Exterieur Anwendungen im Fahrzeugbau, Karosseriebestandteile, Gehäuseverkleidungen und Verkleidungsteile von Maschinenanlagen eingesetzt werden.

Weiterhin weisen die füllstoffhaltigen Formteile vorzugsweise ein Zugmodul nach DIN EN ISO 527 von größer 1200 MPa, besonders bevorzugt größer 1500 MPa auf, sowie eine Bruchdehnung nach DIN EN ISO 527 von größer 3% und ein Biegemodul, gemessen nach DIN EN ISO 178, von größer 1200 MPa und eine Wärmeformbeständigkeit nach DIN EN ISO 75, die als HDT/B bestimmt wird, von größer 120 °C auf.

Dabei zeigt die im erfindungsgemäßen Verfahren eingesetzte Polyolkomponente, enthaltend (a) Polyesterdiol und (b) Kettenverlängerer, eine hohe Stabilität auch bei Raumtemperatur und entmischt nicht. Weiter kann bei der Herstellung auf Trennmittel und in vielen Fällen auch auf Emulgatoren verzichtet werden. Durch diesen Verzicht und den Ersatz des teuren Rohstoffs Polytetrahydrofuran können die Polyurethanelastomerformteile kostengünstig und effizient hergestellt werden. Schließlich zeigen die Polyurethanformteile nach der vorliegenden Erfindung hervorragende Oberflächeneigenschaften.

Die Erfindung soll im Folgenden anhand von Beispielen verdeutlicht werden.

Gemäß der folgenden Tabelle wurden Polyurethanformteile hergestellt. Dazu wurde das eingesetzte Isocyanat als Isocyanatkomponente sowie die übrigen Einsatzstoffe als Polyolkomponente in eine Hockdruckmaschine gegeben und im Gegenstrom bei einer Temperatur von jeweils 70 °C und einem Druck von jeweils 170 bar vermischt und in eine Form gegeben. Das Salz, falls verwendet, wurde vor Zugabe zu den restlichen Bestandteilen der Polyolkomponente vollständig im Diamin bei 110 °C gelöst. Die Formtemperatur betrug 110 °C, das Formvolumen 3 I und die Schusszeit betrug 4 bis 6 Sekunden. Die Mengenangaben sind Gewichtsteile.

**Tabelle 1**

| | B1 | B2 | B3 | B4 | B5 | V1 | V2 | V3 |
|---|---|---|---|---|---|---|---|---|
| Polyol 1 | 57,5 | 29,0 | 28,5 | 34,6 | 34,6 | | | |
| Polyol 2 | | | | | | 50,1 | 27,2 | 26,9 |
| KV1 | 42 | 28,8 | 30,0 | 25,3 | 25,3 | 40,2 | 21,2 | 21,4 |
| KV2 | | | | | | 5,6 | 3,0 | 3,0 |
| Kat | 0,05 | 0,03 | 0,03 | 0,05 | 0,05 | 0,02 | 0.02 | 0,01 |
| Emulgator | 0,5 | | | 0,3 | 0,3 | 0,3 | 0,3 | 0,2 |
| Additiv | | | | | | 3.7 | 2,0 | 2,0 |
| Füllstoff1 | | 42,2 | 41,4 | | | | 46,2 | |
| Füllstoff 2 | | | | 39,7 | 39,7 | | | 46,4 |
| Fasergehalt [Gew.-%] | 0 | 19 | 19 | 19 | 19 | 0 | 23 | 26 |
| | | | | | | | | |
| Iso 1 | x | x | x | x | x | | | |
| Iso 2 | | | | | | x | x | x |
| Index | 104 | 103 | 105 | 100 | 104 | 104 | 104 | 104 |
| | | | | | | | | |
| Formtemp. [°C] | 120 | 110 | 130 | 120 | 100 | 120 | 120 | 120 |
| | | | | | | | | |
| Dichte [g/l] | 1185 | 1300 | 1320 | 1388 | 1358 | 1075 | 1238 | 1162 |
| Härte [shore D] | 66 | 74 | 74 | 71 | 72 | 62 | 69 | 70 |
| Biegespannung [MPa] | 27 | 65 | 58 | 45 | 43 | 26 | 40 | 49 |
| Durchbiegung [mm] | 13 | 11 | 12 | 13 | 13 | 14 | 10 | 11 |
| Biegemodul [MPa] | 600 | 2000 | 1800 | 1500 | 1400 | 600 | 1400 | 1600 |
| HDT-B [°C] | 139 | 154 | 159 | 130 | 133 | 54 | 154 | 186 |
| Oberflächengüte | ++ | ++ | ++ | ++ | ++ | + | + | + |

Die Härte wurde gemäß DIN 53505 bestimmt. Biegemodul, Durchbiegung und Biegespannung wurden gemäß DIN EN ISO 527 bestimmt. Die Wärmeformbeständigkeitstemperatur HDT-B wurde gemäß DIN EN ISO 75-1,-2,-3 bestimmt.

Dabei bedeuten:

| | |
|---|---|
| Polyol 1: | Polyesterol aus Adipinsäure, 1,4-Butandiol, 1,5-Propandiol und 1,6-Hexandiol mit einer OH-Zahl von 56 |
| Polyol 2: | Polytetrahydrofuran mit einem zahlenmittleren mittleren Molekulargewicht von 1000 g/mol |
| KV1: | 1,4-Butandiol |
| KV2: | Polyetheramin Jeffamin® D400 der Firm Huntsman |
| Kat: | Dimethylzinndilaurat |
| Emulgator: | Emulgator BYK® 9904 von ByK Chemie |
| Additiv: | Zinnstearate |
| Füllstoff 1: | Kurzglasfaser, Lanxess® MF 7980 |
| Füllstoff 2: | Calciumsilikat Tremin®939-955 |
| Iso 1: | Prepolymer aus 97 Gew.-Teilen 4,4'-Diphenylmethandiisocyanat und 2 Gew.-Teilen carbodiimidmodifiziertem 4,4'-Diphenylmethandiisocyanat und Polyesterol aus Adipinsäure, Monoethylenglycol, Diethylenglycol, 1,4-Butandiol und Trimethylolpropan mit einer Funktionalität von 2,15 und einer OH-Zahl von 55 mg KOH/g und einem NCO-Gehalt von 26 % |
| Iso 2: | 97 Gew.-Teilen 4,4'-Diphenylmethandiisocyanat und 2 Gew.-Teilen carbodiimidmodifiziertem 4,4'-Diphenylmethandiisocyanat und Polytetrahydrofuran mit einem zahlenmittleren mittlerem Molekulargewicht von 1000 g/mol und einem NCO-Gehalt von 27 % |

Die erfindungsgemäß erhaltenen Polyurethanelastomerformkörper erlauben den Einsatz preisgünstiger Rohstoffe bei gelichzeitig sehr guten mechanischen Eigenschaften. Auf den Einsatz von Formtrennmittel und Emulgator kann verzichtet werden. Dabei ist die Oberflächengüte der erhaltenen Formteile gegenüber Formteilen auf Polytetrahydrofuran weiter verbessert. Auch zeigen ungefüllte Formteile eine höhere Wärmeformstabilität als PTHF-basierte Formkörper.

### Stabilität der Isocyanatkomponente:

Iso 1 und Iso 2 wurden nach der Herstellung bei 23 °C gelagert. Nach 24 Stunden war Iso 1 flüssig und durchscheinend, während Iso 2 auskristallisiert war.

## Patentansprüche

1. Verfahren zur Herstellung von porenfreien Polyurethanelastomerformteilen mit einer Shore D Härte nach DIN 53505 von 60 oder mehr, bei dem man
(a) Polyesterdiol mit einer OH-Zahl von 20 bis 100 mg KOH/g und
(b) Kettenverlängerer, bestehend aus Diol mit einem Molekulargewicht von kleiner 300 g/mol, mit
(c) Isocyanatprepolymeren, erhältlich durch Umsetzung von Diisocyanat mit Polyesterolen mit einer Funktionalität von 1,95 bis 2,2 und einer OH-Zahl von 20 bis 200 mg KOH/g, und gegebenenfalls
(d) Katalysatoren,
(e) Emulgator und
(f) sonstigen Zusatzstoffen zu einer Reaktionsmischung vermischt, in eine Form gibt und zum Polyurethanelastomer aushärtet.

2. Verfahren nach Anspruch 1, **dadurch gekennzeichnet, dass** das Gewichtsverhältnis von Polyesterdiol (a) zu Kettenvarlängerer (b) im Bereich von 70 : 30 bis 40 : 60 liegt.

3. Verfahren nach Anspruch 1 oder 2, **dadurch gekennzeichnet, dass** das Polyesterdiol (a) erhältlich ist durch Kondensation einer als Dicarbonsäurekomponente und einer Diolkomponente, wobei die Dicarbonsäurekomponente Adipinsäure enthält.

4. Verfahren nach einem der Ansprüche 1 bis 3, **dadurch gekennzeichnet, dass** das Polyesterdiol erhältlich ist durch Kondensation einer als Dicarbonsäure und einer Diolkomponente, wobei die Diolkomponente Diole mit 4 bis 8 Kohlenstoffatomen enthält.

5. Verfahren nach einem der Ansprüche 1 bis 4, **dadurch gekennzeichnet, dass** das aliphatische Isocyanat zur Herstellung der Isocyanatprepolymere (c) Diphenylmethandiisocyanat, einschließlich Derivaten von Diphenylmethandiisocyanat, mit einer mittleren Funktionalität von 2,0 bis 2,2 ist.

6. Verfahren nach Anspruch 5, **dadurch gekennzeichnet, dass** das die Funktionalität des Diphenylmathandiisocyanats 2,0 ist.

7. Verfahren nach Anspruch 5 oder 6, **dadurch gekennzeichnet, dass** das aromatische Isocyanat zur Herstellung der Isocyanatprepolymere (c) zu 90 Gew.-% aus 4,4'-Diphenylmethandiisocyanat und carbodiimid modifiziertem 4,4'-Diphenylmethandiisocyanat besteht.

8. Verfahren nach einem der Ansprüche 1 bis 7, **dadurch gekennzeichnet, dass** die Reaktionsmischung ein nichtionisches Tensid als Emulgator (e) enthält.

9. Verfahren nach einem der Ansprüche 1 bis 8, **dadurch gekennzeichnet, dass** die Komponenten (a) bis (f) in einem Verhältnis miteinander vermischt werden, dass der Isocyanatindex 100 bis 106 beträgt.

10. Verfahren nach einem der Ansprüche 1 bis 9, **dadurch gekennzeichnet, dass** man Polyesterdiol (a), Butandiol (b), den Emulgator und gegebenenfalls Katalysatoren, Reaktivkettenverlängerer und sonstigen Zusatzstoffen im Gegenstromverfahren bei einem Druck von mehr als 100 bar mit dem Isocyanat vermischt und die erhaltene Mischung in eine geschlossene Form gibt.

11. Verfahren nach einem der Ansprüche 1 bis 10, **dadurch gekennzeichnet, dass** der Kettenverlängerer (c) 1,4-Butandiol ist.

12. Verfahren nach einem der Ansprüche 1 bis 11, **dadurch gekennzeichnet, dass** als Zusatzstoffe Füllstoffe und wasserabsorbierende Stoffe eingesetzt werden.

13. Polyurethanformteil, erhältlich nach einem Verfahren gemäß einem der Ansprüche 1 bis 12.

14. Verwendung eines Polyurethanformteils nach Anspruch 13, als Verkleidungsteil für Nutzfahrzeuge, Karosseriebauteil im Fahrzeugbau oder ein Verkleidungsteil von einer Maschinenanlage.
